# EUROPÄISCHE PATENTSCHRIFT

(11) **EP 0 545 124 B1**
(45) Veröffentlichungstag und Bekanntmachung des Hinweises auf die Patenterteilung: **18.09.1996**
(21) Anmeldenummer: 92119509.5
(22) Anmeldetag: 14.11.1992
(51) Int. Cl.: B60R 11/02

(54) **Einbaueinrichtung für Zusatzgeräte in vorgegebenen Einbauöffnungen von Kfz.**
Mounting device for an auxiliairy apparatus in a precut opening of a motor vehicle
Dispositif de montage pour un appareil auxiliaire dans une ouverture prédécoupée d'un véhicule automobile

(30) Priorität: 29.11.1991 DE 4139310
(43) Veröffentlichungstag der Anmeldung: 09.06.1993
(73) Patentinhaber: Blaupunkt-Werke GmbH, D-31132 Hildesheim (DE)
(72) Erfinder: Leyder, Klaus, W-3200 Hildesheim (DE); Becker, Hubert, W-3200 Hildesheim (DE)

(56) Entgegenhaltungen:
- DE-A- 3 521 089
- DE-C- 3 906 216
- US-A- 4 913 384

## Beschreibung

Die Erfindung betrifft eine Einbaueinrichtung für den Einbau eines Zusatzgerätes für Kraftfahrzeuge, inbesondere eines Autoradios, Cassettengerätes oder dergleichen nach dem Oberbegriff des Anspruchs 1.

Viele Kraftfahrzeuge weisen in ihrem Armaturenbrett oder in einer besonderen Konsole vorgegebene Einbauöffnungen für Zusatzgeräte auf.

Aus der DE 29 03 176 C2 ist eine galtungsgemäß Einbaueinrichtung für den Einbau eines Zusatzgerätes für Kraftfahrzeuge in einer vorgegebenen Einbauöffnung bekannt, wobei Rastausnehmungen in einem quaderförmigen, an Vorder- und Rückseite offenen, in den Umfangsabmessungen dem Zusatzgerätegehäuse und der Einbauöffnung angepaßten Einbaurahmen vorgesehen sind, der zur Befestigung in der Einbauöffnung mit mehreren, den Rand der Einbauöffnung hintergreifenden Laschen versehen ist und wobei das Zusatzgerät von vorn in den Einbaurahmen einschiebbar ist, bis an dem Zusatzgerät angeordnete federnde Rastnasen in die Rastausnehmungen einrasten und die Rastvorrichtung verriegeln. Der Ausbau des Gerätes erfolgt mit einem stiftförmigen Hilfswerkzeug, mit welchem die durch 4 Öffnungen in der Gerätevorderseite zugänglichen Rastvorrichtungen entriegelt und das Gerät herausgezogen wird.

Der Erfindung liegt die Aufgabe zugrunde, eine einen Einbaurahmen aufweisende Befestigungsvorrichtung für ein Autoradio zu schaffen, die einen schnellen Einbau gestattet, jedoch keine zum Ausbau erforderliche Öffnung in der Frontwand des Radios aufweist.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß die Vorrichtung preisgünstig herstellbar, einfach montierbar und leicht lösbar ist sowie keine Entriegelungsöffnungen in der Frontblende des Radios erfordert.

Vorteilhafte Ausgestaltungen der Einbaueinrichtung sind in den Unteransprüchen angegeben. In besonders einfacher Weise läßt sich ein Entriegelungswerkzeug nach Anspruch 2 gestalten. Mit einem Entriegelungswerkzeug nach Anspruch 3 läßt sich das Autoradio nach dem Entriegeln in vorteilhafter Weise aus dem Einbaurahmen herausziehen. Bei einer vorteilhaften Anordnung der Rastmittel nach Anspruch 5 ist der für ein Einführen der Entriegelungswerkzeuge zwischen dem unteren Rand der Frontplatte und dem Armaturenbrett bzw. der Konsole erforderliche Spalt für den Benutzer nicht sichtbar.

Ein Ausführungsbeispiel der Erfindung ist in der Zeichnung dargestellt und wird im folgenden näher beschrieben.

Es zeigen:
- Fig. 1: Eine prinzipielle Schnittzeichnung einer Einbaueinrichtung mit einem eingebauten Autoradio,
- Fig. 2: eine prinzipielle, vergrößert dargestellte Schnittzeichnung der Einbaueinrichtung mit einem eingeschobenen Entriegelungswerkzeug,
- Fig. 3: eine Seitenansicht und
- Fig. 4: die Draufsicht eines vereinfacht und stark verkleinert dargestellten Autoradios,
- Fig. 5: die Vorderansicht,
- Fig. 6: eine Seitenansicht und
- Fig. 7: die Draufsicht eines verkleinert dargestellten Einbaurahmens,
- Fig. 8: die Vorderansicht,
- Fig. 9: die Draufsicht und
- Fig. 10: eine Seitenansicht einer Rastfeder,
- Fig. 11: eine Seitenansicht und
- Fig. 12: die Draufsicht eines Entriegelungswerkzeuges.

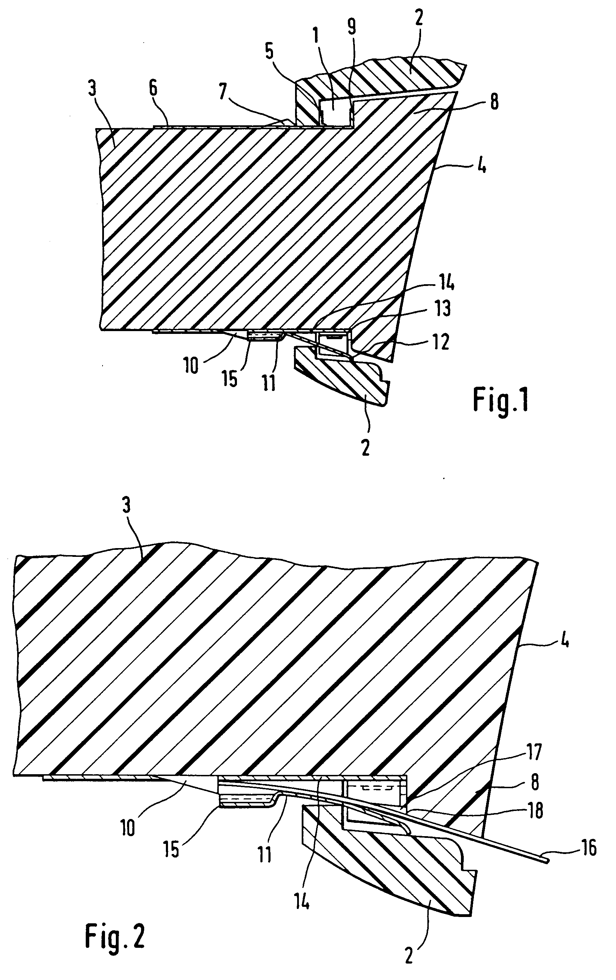

In einer Einbauöffnung 1 eines in der Fig. 1 dargestellten Armaturenbrettes 2 ist ein stark vereinfacht dargestelltes Autoradio 3 eingebaut, wobei die Frontplatte 4 des Autoradios 3 der Kontur des Armaturenbrettes 2 angepaßt ist. In der abgesetzt ausgebildeten Einbauöffnung 1 ist ein quaderförmiger, an Vorder- und Rückseite offener, in den Umfangsabmessungen dem Autoradiogehäuse 3 und der Einbauöffnung 1 angepaßter, mit Anschlägen 5 an der Vorderkante versehener Einbaurahmen 6 angeordnet, der zur Befestigung in der Einbauöffnung 1 mit mehreren, den Rand der Einbauöffnung 1 hintergreifenden Rastnasen 7 versehen ist, wobei die Anschläge am abgesetzten vorderen Rand der Einbauöffnung 1 anliegen. Der flanschartig überstehende Rand 8 der Frontplatte 4 liegt mit Teilen seiner hinteren Fläche an vorgezogenen Anschlägen 9 des Einbaurahmens 6 an. An der unteren Seite des Einbaurahmens 6 sind in einem vorgegebenen Abstand 2 Rastmittel angeordnet, die jeweils aus einer am Bodenblech des Autoradios angeformten Rastnase 10 und einer am Einbaurahmen 6 angeordneten, blattförmig ausgebildeten Rastfeder 11 bestehen. Die Rastfeder 11 ist mit einem Ende im vorderen Randbereich des Einbaurahmens 6 derart am Einbaurahmen befestigt, daß ihr eines Ende 12 einen nach außen gerichteten vorgegebenen Abstand zur vorderen unteren Kantenlinie 13 des Einbaurahmens 6 aufweist. Der erste Teilabschnitt der Rastfeder 11 verläuft innerhalb einer in der Wandung des Einschubrahmens 6 vorgesehenen Aussparung 14 unter einer Schräge bis zum Bodenblech des Autoradios 3 und ihr zweiter Teilabschnitt von dort nach einem vorgegebenen Knick annähernd parallel zum Bodenblech des Autoradios 3, wobei ihr freies Ende 15 die Rastnase 10 hintergreift.

Wird nun, wie in Fig. 2 dargestellt, ein aus Federmaterial hergestelltes, flach und streifenförmig ausgebildetes Entriegelungswerkzeug 16 unter einem der Schräge des ersten Teilabschnittes der Rastfeder 11 entsprechenden Winkel zwischen der Rastfeder 11 und dem Bodenblech des Autoradios 3 angeschoben, so wird der zweite Teilabschnitt der Rastfeder 11 derart ausgelenkt, daß ihr freies Ende 15 die Rastnase 10 freigibt. Das Entriegelungswerkzeug 16 ist an der Oberseite mit einer Rastzunge 17 versehen, die bei einem eingeschobenen Werkzeug 16 eine am überstehenden Rand 8 der Frontplatte 4 vorgesehene Rastkante 18 hintergreift und damit ein Herausziehen des Autoradios 3 mittels des Entriegelungswerkzeuges 16 ermöglicht.

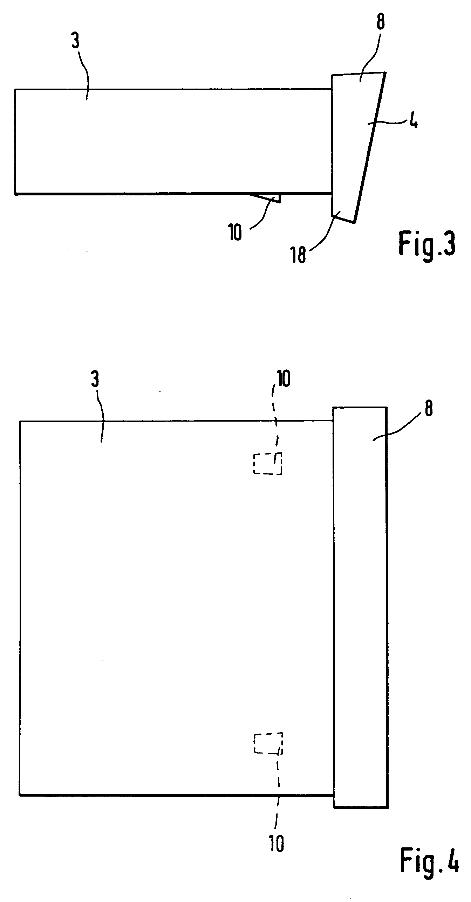

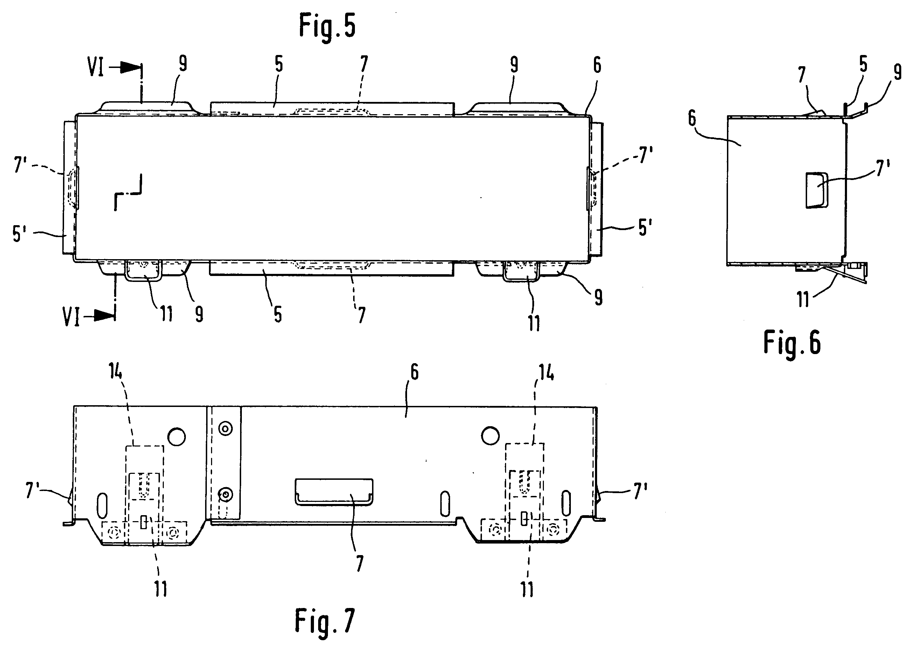

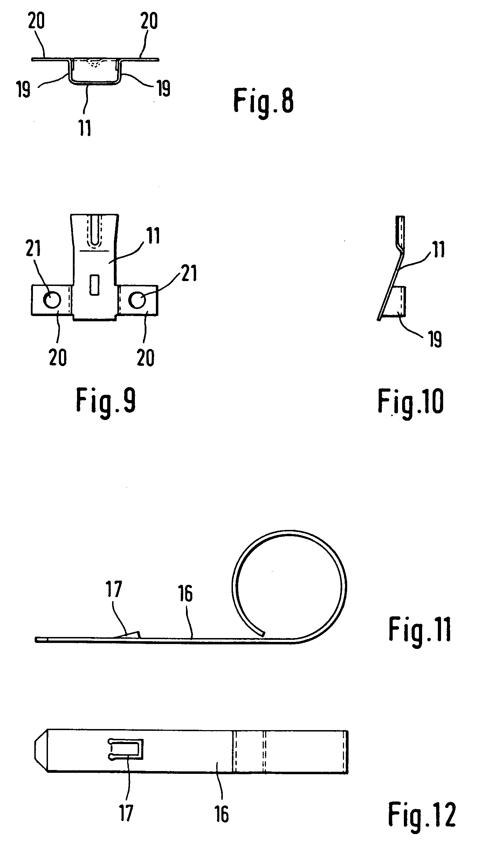

Bei einem in den Fig. 3 und 4 schematisch dargestellten Autoradio 3 sind die aus dem Gehäuseboden herausgedrückten Rastnasen 10 in einem vorgegebenen Abstand voneinander angeordnet. Bei dem aus Blech hergestellten Einbaurahmen 6 nach den Fig. 5, 6 und 7 sind oben, unten und seitlich aus dem Material herausgedrückte Rastnasen 7, 7' vorgesehen. Die Anschläge 5 sind mittig an der oberen und unteren Wandung, die Anschläge 5' an den Seitenwandungen angebracht. Die vorgezogenen Anschläge 9 sind an den äußeren Abschnitten der oberen und der unteren Wandung angebracht. In der unteren Wandung sind zwei in einem vorgegebenen Abstand voneinander entfernte, zum vorderen Rand des Einbaurahmens 6 hin offene Aussparungen 14 vorgesehen, in denen je eine in den Fig. 9, 8 und 10 dargestellte Rastfeder 11 angeordnet ist. Die Rastfeder 11 ist an ihrem zur Befestigung vorgesehenen Ende mit quer zu ihrer Längsrichtung angeformten Laschen versehen, deren erste Teilabschnitte 19 nach oben und deren zweite Teilabschnitte 20 nach außen gerichtet sind. Die in den zweiten Teilabschnitten 20 vorgesehenen Bohrungen 21 dienen zur Befestigung der Rastfedern 11 am Einbaurahmen 6.

Das aus einem flachen Federmaterial hergestellte Entriegelungswerkzeug 16 nach den Fig. 11 und 12 weist eine herausgestanzte, ein freies Ende aufweisende Rastzunge 17 auf, die leicht nach oben gerichtet ist. Zur besseren Handhabung ist das eine Ende des Entriegelungswerkzeuges 16 ringförmig ausgebildet.

## Patentansprüche

1. Einbaueinrichtung für den Einbau eines Zusatzgerätes für Kraftfahrzeuge, insbesondere eines Autoradios, Cassettengerätes oder dergleichen, in einer vorgegebenen Einbauöffnung mit einer Rastvorrichtung, die federnde Rastmittel (11) als erste Rastmittel und damit zusammenwirkende Rastkanten (10) als zweite Rastmittel umfaßt und von denen die einen Rastmittel am Zusatzgerät und die anderen Rastmittel an einem quaderförmigen, an Vorder- und Rückseite offenen, in den Umfangsabmessungen dem Zusatzgerätegehäuse und der Einbauöffnung angepaßten, in der Einbauöffnung befestigbaren Einbaurahmen (6) angeordnet sind, wobei das Zusatzgerät (3) von vorn in den Einbaurahmen (6) einschiebbar ist, bis die Rastvorrichtung (10,11) verriegelt ist und wobei die Rastvorrichtung (10,11) für ein Werkzeug (16) zugänglich ist, durch das die federnden Rastmittel (11) aus ihrer Raststellung zurückdrängbar sind,
dadurch gekennzeichnet,
daß die einen am Zusatzgerät (3) angeordneten Rastmittel als Rastnasen (10) ausgebildet sind und daß die anderen am Einbaurahmen (6) angeordneten Rastmittel als Rastfedern (11) ausgebildet sind, welche in ihnen zugeordneten, in der Wandung des Einbaurahmens (6) vorgesehenen Aussparungen (14) angeordnet sind, daß jede der Rastfedern (11) mit einem Ende im vorderen Randbereich des Einbaurahmens (6) derart am Einbaurahmen (6) befestigt ist, daß ihr eines Ende einen nach außen gerichteten vorgegebenen Abstand zur vorderen Kantenlinie (13) des Einbaurahmens (6) aufweist, daß ein erster Teilabschnitt der plattförmig ausgebildeten Rastfeder (11) unter einer Schräge vom einen Ende bis zur Außenwand des Zusatzgerätes (3) verläuft, daß die Rastfeder (11) einen derartigen Knick aufweist, daß ein zweiter Teilabschnitt weitgehend parallel zur Außenwand des Zusatzgerätes (3) verläuft und die Rastfeder (11) mit ihrem freien Ende (15) die am Zusatzgerät (3) angeordnete Rastnase (10) hintergreift.

2. Einbaueinrichtung nach Anspruch 1,
dadurch gekennzeichnet,
daß zur Entriegelung einer Rastfeder (11) ein aus einem Federmaterial hergestelltes, flach und streifenförmig ausgebildetes Entriegelungswerkzeug (16) vorgesehen ist, welches bei einem eingebauten Zusatzgerät (3) unter einem vorgegebenen Winkel zur Einschubachse des Zusatzgerätes (3) an einem überstehenden Rand (8) einer am Zusatzerät (3) vorgesehenen Frontplatte (4) vorbei zwischen der Rastfeder (11) und der Außenwand des Zusatzgerätes (3) derart einführbar ist, daß das freie Ende (15) der Rastfeder (11) die ihr zugeordnete Rastnase (10) freigibt.

3. Einbaueinrichtung nach Anspruch 2,
dadurch gekennzeichnet,
daß das streifenförmig ausgebildete Entriegelungswerkzeug (16) mit einer Rastzunge (17) versehen ist, welche bei einem eingeschobenen Werkzeug (16) nach der Entriegelung der Rastfeder (11) eine am Zusatzgerät vorgesehene Rastkante (18) hintergreift und damit ein Herausziehen des entriegelten Zusatzgerätes (3) mittels des Entriegelungswerkzeuges (16) ermöglicht.

4. Einbaueinrichtung nach einen der Ansprüche 1 bis 3,
dadurch gekennzeichnet,
daß die Rastmittel (10/11) an gegenüberliegenden Seiten des Einbaurahmens (6) angeordnet sind.

5. Einbaueinrichtung nach einem der Ansprüche 1 bis 3,
dadurch gekennzeichnet,
daR die Rastmittel (10/11) an der unteren Seite des Einbaurahmens (6) angeordnet sind.

6. Einbaueinrichtung nach Anspruch 5,
dadurch gekennzeichnet,
daß zwei in einem vorgegebenen Abstand angeordnete Rastmittel (10/11) an der Geräteunterseite vorgesehen sind.

## Claims

1. Installation device for the installation of an auxiliary apparatus for motor vehicles, in particular a car radio, cassette machine or the like, in a specified installation opening, having a latching device which comprises resilient latching means (11) as the first latching means and latching edges (10), which interact therewith, as the second latching means, and of which the one set of latching means are arranged on the auxiliary apparatus and the other latching means are arranged on a cuboidal installation frame (6) which is open at the front and rear side, is matched in the circumferential dimensions to the housing of the auxiliary apparatus and to the installation opening and can be fastened in the installation opening, it being possible for the auxiliary apparatus (3) to be pushed from the front into the installation frame (6) until the latching device (10, 11) is locked, and the latching device (10, 11) being accessible for a tool (16) by means of which the resilient latching means (11) can be forced back out of their latching position, characterized in that the one set of latching means which are arranged on the auxiliary apparatus (3) are designed as latching projections (10) and in that the other latching means, which are arranged on the installation frame (6), are designed as latching springs (11) which are arranged in recesses (14) assigned to them and provided in the wall of the installation frame (6), in that each of the latching springs (11) is fastened on the installation frame (6), with one end in the front border region of the installation frame (6), in a manner such that its one end is at a specified, outwardly directed spacing from the front edge line (13) of the installation frame (6), in that a first subsection of the latching spring (11), which is designed in the shape of a plate, runs at a slope from one end to the outer wall of the auxiliary apparatus (3), in that the latching spring (11) has such a bend that a second subsection runs substantially parallel to the outer wall of the auxiliary apparatus (3) and the latching spring (11) engages, with its free end (15), behind the latching projection (10) arranged on the auxiliary apparatus (3).

2. Installation device according to Claim 1, characterized in that for the release of a latching spring (11) a release tool (16) is provided, which release tool is produced from a spring material, is designed such that it is flat and strip-shaped and in the case of an inserted auxiliary apparatus (3) can be inserted, at a specified angle with respect to the insertion axis of the auxiliary apparatus (3), past a protruding border (8) of a front panel (4) provided on the auxiliary apparatus (3), between the latching spring (11) and the outer wall of the auxiliary apparatus (3) in such a manner that the free end (15) of the latching spring (11) releases the latching projection (10) assigned to it.

3. Installation device according to Claim 2, characterized in that the release tool (16), which is of strip-shaped design, is provided with a latching tongue (17) which, when a tool (16) has been inserted and the latching spring (11) released, engages behind a latching edge (18) provided on the auxiliary apparatus and thus makes it possible for the released auxiliary apparatus (3) to be pulled out by means of the release tool (16).

4. Installation device according to one of Claims 1 to 3, characterized in that the latching means (10, 11) are arranged on opposite sides of the installation frame (6).

5. Installation device according to one of Claims 1 to 3, characterized in that the latching means (10/11) are arranged on the lower side of the installation frame (6).

6. Installation device according to Claim 5, characterized in that two latching means (10/11), which are arranged at a specified spacing, are provided on the lower side of the apparatus.

## Revendications

1. Dispositif de montage pour monter un accessoire de véhicule automobile, notamment un autoradio, un lecteur de cassettes ou appareils analogues, dans une ouverture de montage prédéterminée, comprenant un dispositif d'accrochage ayant des moyens d'accrochage (11) élastiques comme premiers moyens d'accrochage et des arêtes d'accrochage (10) coopérant avec ceux-ci et constituant les seconds moyens d'accrochage et, parmi ceux-ci, certains moyens d'accrochage sont prévus sur l'accessoire et les autres sur un châssis de montage (6), de forme rectangulaire, à face avant et arrière ouvertes, de dimensions périphériques adaptées à celles du boîtier de l'accessoire et à celles de l'orifice de montage, ce châssis se fixant dans l'orifice de montage, l'accessoire (3) se glissant par le devant dans le châssis de montage (6) jusqu'à ce que le dispositif d'accrochage (10, 11) soit verrouillé, le dispositif d'accrochage (10, 11) étant accessible à un outil (16) qui permet de repousser les moyens d'accrochage élastiques (11) à partir de leur position d'accrochage,
caractérisé en ce que
les moyens d'accrochage associés à l'accessoire (3) sont en forme de becs d'accrochage (10) et les autres moyens d'accrochage associés au châssis (6) sont en forme de ressorts d'accrochage (11) auxquels sont associées des cavités (14) dans la paroi du châssis (6),
chacun des ressorts d'accrochage (11) est fixé par une extrémité dans la zone du bord avant du châssis de montage (6) d'une manière telle, sur ce châssis de montage (6), que son extrémité soit distante de l'arête avant (13) du châssis de montage (6) d'une distance prédéterminée dirigée vers l'extérieur,
un premier segment partiel du ressort-lame (11) en forme de plaque passe sous une surface en biais, d'une extrémité jusqu'à la paroi extérieure de l'accessoire (3),
le ressort d'encliquetage (11) présente un coude tel que son second segment partiel soit pratiquement parallèle à la paroi extérieure de l'accessoire (3), et le ressort d'encliquetage (11) vient prendre par son extrémité libre (15) derrière le bec d'accrochage (10) de l'accessoire (3).

2. Dispositif de montage selon la revendication 1,
caractérisé par
- un outil de déverrouillage plat (16), en forme de bande, réalisé en un matériau élastique pour déverrouiller un ressort d'encliquetage (11),
- et, lorsque l'accessoire (3) est monté, cet outil se glisse suivant un angle prédéterminé par rapport à l'axe d'introduction de l'accessoire (3), sur un bord (8) en saillie, d'une façade (4) prévue sur l'accessoire (3), et entre le ressort d'encliquetage (11) et la paroi extérieure de l'accessoire (3) de façon que l'extrémité libre (15) du ressort d'encliquetage (11) libère le bec d'accrochage (10) qui lui est associé.

3. Dispositif de montage selon la revendication 2,
caractérisé en ce que
l'outil de déverrouillage (16) en forme de bande est muni d'une languette d'accrochage (17) qui, lorsque l'outil (16) est engagé, vient prendre, après déverrouillage du ressort d'encliquetage (11), sur un bec d'accrochage (18) prévu sur l'accessoire et permet ainsi l'extraction de l'accessoire (3) déverrouillé à l'aide de l'outil de déverrouillage (16).

4. Dispositif de montage selon l'une des revendications 1 à 3,
caractérisé en ce que
les moyens d'encliquetage (10, 11) sont prévus sur les côtés opposés du châssis de montage (6).

5. Dispositif de montage selon l'une des revendications 1 à 3,
caractérisé en ce que
les moyens d'encliquetage (10, 11) sont prévus sur le côté inférieur du châssis de montage (6).

6. Dispositif de montage selon la revendication 5,
caractérisé par
deux moyens d'encliquetage (10, 11) prévus à un intervalle prédéterminé sur la face inférieure de l'accessoire.
